# EUROPEAN PATENT SPECIFICATION

(11) **EP 1 986 182 B1**
(45) Date of publication and mention of the grant of the patent: **21.10.2009**
(21) Application number: 08155181.4
(22) Date of filing: 25.04.2008
(51) Int. Cl.: G09G 3/36

(54) **Liquid crystal display**
Flüssigkristallanzeige
Écran à cristaux liquides

(30) Priority: 27.04.2007 KR 20070041270
(43) Date of publication of application: 29.10.2008
(73) Proprietor: Samsung Mobile Display Co., Ltd., Suwon-si Gyeonggi-do (KR)
(72) Inventor: Kim, Minwoo, Gyeonggi-do (KR); Kim, Minhyung, Gyeonggi-do (KR)
(74) Representative: Hengelhaupt, Jürgen

(56) References cited:
- EP-A- 1 492 078
- US-A1- 2003 095 091
- US-A1- 2004 178 977

## Description

### BACKGROUND OF THE INVENTION

### 1. Field of the Invention

The present invention relates to a liquid crystal display.

### 2. Description of the Related Art

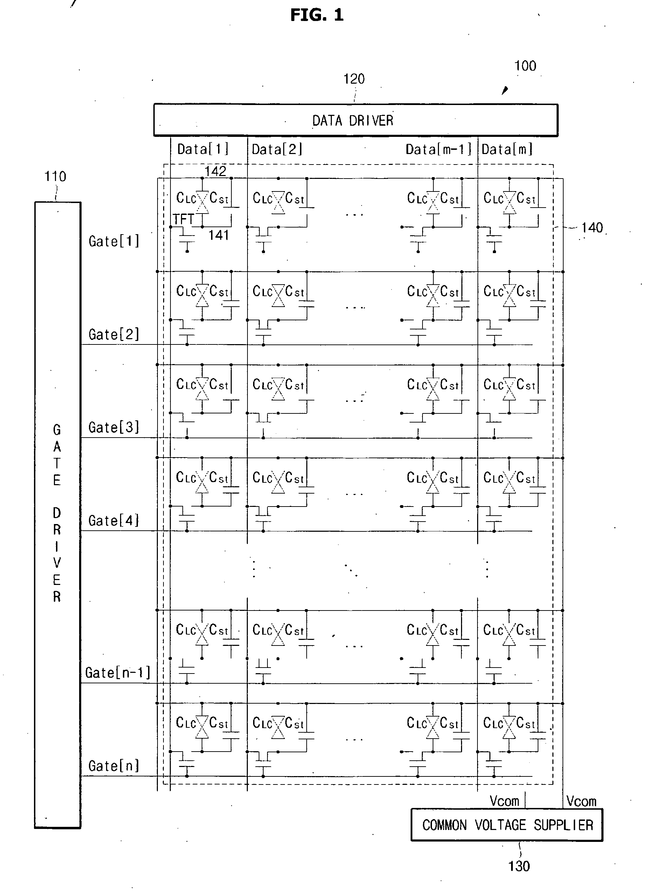

A conventional liquid crystal display portrays images by controlling the light transmittance of liquid crystal using an electric field. To this end, the liquid crystal display includes a liquid crystal panel in which liquid crystal elements are arranged in a matrix form and a driving circuit for driving the liquid crystal display panel. In the liquid crystal display 100 as illustrated in FIG.1, a liquid crystal display panel 140, in which data lines Data [1] to Data [m] coupled to a data driver 120 and gate lines Gate [1] to Gate [n] coupled to a gate driver 110 are crossed, is provided with thin film transistors (TFTs) for driving liquid crystal elements C_{LC} at the crossed portions. The liquid crystal display panel is further provided with storage capacitors Cₛₜ for maintaining the voltage of the liquid crystal element C_{LC}. The liquid crystal element C_{LC} controls the amount of light transmitted or shields light by changing the arrangement of liquid crystal molecules with an electric field in a, liquid crystal layer therein. The electric field is generated when data voltage is applied to a pixel electrode 141 from the data driver 120 and common voltage Vcom is applied from a common voltage supplier 130.

In the liquid crystal display 100, the common voltage line is formed in a short structure within the liquid crystal display panel. When the common voltage is applied to a common electrode 142 and the gate voltage is input to apply the data voltage to the pixel electrode 141, the storage capacitor Cₛₜ, coupled between the common electrode 142 and the pixel electrode 141, charges an amount of charge corresponding to the voltage difference therebetween. However, while the gate voltage propagates or moves from the left-most pixel to the right-most pixel, a delay error occurs due to electric resistance of the gate line and a capacitive layer thereon so that an error between the data voltage value applied to the pixel electrode at a left end and the data voltage value applied to the pixel electrode at a right end occurs due to the delay. In order to minimize the delay error, the common voltage is applied to both ends of the liquid crystal display by shorting both ends of the common voltage line. Presently, the delay error does not occur in the first pixel or the last pixel. However, the delay error occurs in the pixel coupled to a central column, that is, a data line Data [m/2]. Even though the common voltage is applied at both ends of the common voltage line, each pixel becomes more asymmetrical in the amount of charge the closer the pixel is to the central column of the liquid crystal display. An afterimage occurs due to asymmetrical amounts of charge stored in each pixel depending on the position of the pixel in the liquid crystal display when a displayed pattern changes. Herein, when referring to different amounts of charge stored in respective pixels, it is assumed that identical data voltage are to be applied to the respective pixels and thus identical amounts of charge should be stored in the respective pixels.

EP 1 492 078 A2 discloses a liquid crystal display including first and second gate drivers located at opposite sides of the display. Odd gate lines are connected to the first gate driver, even gate lines are connected to the second gate driver.

US 2003/0095091 A1 discloses a common electrode driving circuit for a liquid crystal display device. The display device includes two sets of common electrodes, each of the sets being connected to a corresponding one of two electrodes located at opposite sides of the display.

### SUMMARY OF THE INVENTION

Accordingly, it is an object of the invention to provide a liquid crystal display comprising a data driver for supplying data voltages to a plurality of data lines extending in a first direction, a gate driver for supplying a gate voltage to a plurality of gate lines extending in a second direction between a first side and a second side opposite to the first side of the liquid crystal display and crossing the data lines, and a common voltage supplier for supplying a common voltage to a plurality of common voltage lines crossing the data lines and parallel with the gate lines. According to the invention, the gate lines comprise even gate lines and odd gate lines, the even gate lines being coupled to the gate driver at a location proximate to the first side and the odd gate lines being coupled to the gate driver at a location proximate to the second side. The common voltage lines comprise even common voltage lines and odd common voltage lines, the odd common voltage lines being coupled to the common voltage supplier at a location proximate to the first side and the even common voltage lines being coupled to the common voltage supplier at a location proximate to the second side.

In the liquid crystal display the odd gate lines may be configured to transfer the gate voltage from the second side toward the first side and the even gate lines may be configured to transfer the gate voltage from the first side toward the second side.

Preferably, the odd common voltage lines may be configured to transfer the common voltage from the first side toward the second side and the even common voltage lines may be configured to transfer the common voltage from the second side toward the first side.

The liquid crystal display may further comprising a plurality of pixels, each of the plurality of pixels being coupled to a corresponding one of the plurality of data lines, a corresponding one of the plurality of gate lines, and a corresponding one of the plurality of common voltage lines, and configured to receive a data voltage, the gate voltage, and the common voltage to operate a liquid crystal element therein.

The plurality of pixels may be located at an area where said one of the plurality of data lines crosses said one of the plurality of gate lines and said one of the plurality of common voltage lines.

Each of the plurality of pixels may comprise a thin film transistor coupled between said one of the plurality of data lines and a pixel electrode, a liquid crystal element coupled between the pixel electrode and a common electrode, and a storage capacitor coupled between the pixel electrode and the common electrode.

The thin film transistor may comprise a control electrode coupled to said one of the plurality of gate lines, a first electrode coupled to said one of the plurality of data lines, and a second electrode coupled to the pixel electrode.

The common electrode may be coupled to said one of the plurality of common voltage lines.

The gate voltage supplied by the even gate lines may be applied from the first side toward the second side and the gate voltage supplied by the odd gate lines may be applied from the second side toward the first side. The common voltage supplied by the even common voltage lines may be applied from the second side toward the first side and the common voltage supplied by the odd common lines may be applied from the first side toward the second side to compensate for each other.

### BRIEF DESCRIPTION OF THE DRAWINGS

The above and other aspects and features of the present invention will be more apparent from the following detailed description taken in conjunction with the accompanying drawings, in which:
FIG. 1 is a block diagram illustrating a conventional liquid crystal display;
FIG. 2 is a block diagram illustrating a liquid crystal display according to one embodiment of the present invention;
FIG. 3 is a circuit diagram illustrating the pixels on the liquid crystal display of FIG. 2 as an equivalent circuit;
FIG. 4a is a graph illustrating the relationship between a data line coupled to odd pixels in the liquid crystal display of FIG. 2 and the amount of charge in the odd pixels;
FIG. 4b is a graph illustrating the relationship between a data line coupled to even pixels in the liquid crystal display of FIG. 2 and the amount of charge in the even pixels;
FIG. 5 is a block diagram illustrating a liquid crystal display according to another embodiment of the present invention;
FIG. 6 is a circuit diagram illustrating the pixels in the liquid crystal display of FIG. 5 as an equivalent circuit; and
FIG. 7a is a graph illustrating the relationship between a data line coupled to odd pixels in the liquid crystal display of FIG. 5 and the amount of charge in the odd pixels.
FIG. 7b is a graph illustrating the relationship between a data line coupled to even pixels in the liquid crystal display of FIG. 5 and the amount of charge in the even pixels.

### DETAILED DESCRIPTION

Hereinafter, the embodiment of the present invention will be described in more detail with reference to the accompanying drawings so that those skilled in the art can readily implement the embodiments of the present invention.

Herein, like reference numerals indicate portions having like constitutions and operations throughout the specification. Also, when a certain portion is described as being coupled to other portions, the portion may be directly coupled or may be indirectly coupled via one or more other portions therebetween, and may include physical coupling and/or electrical coupling.

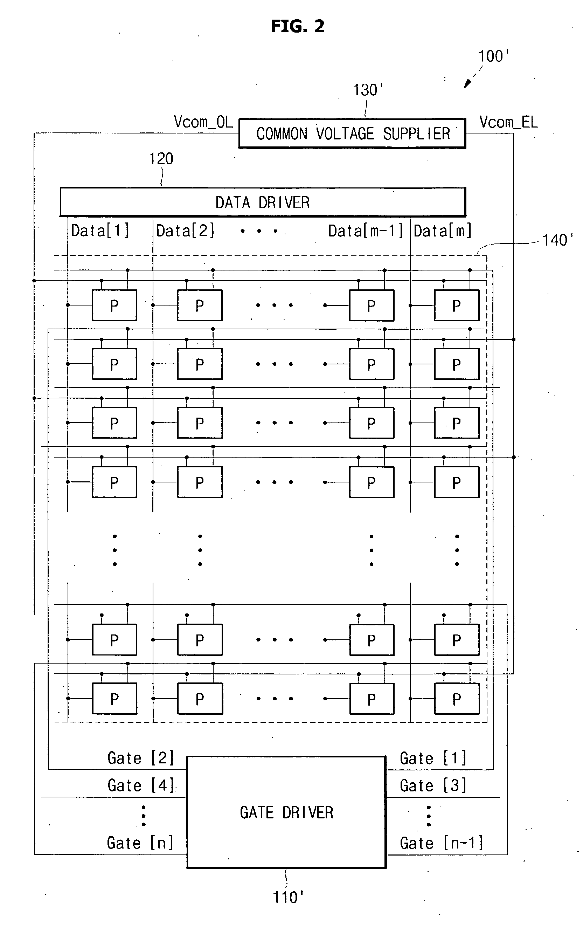

Referring to FIG. 2, there is illustrated a liquid crystal display according to one embodiment of the present invention.

In FIG. 2, the liquid crystal display 100' includes a gate driver 110', a data driver 120, a common voltage supplier 130', and a liquid crystal display panel 140'.

The data driver 120 supplies a data voltage to the liquid crystal display panel 140' through a plurality of data lines Data [1], Data [2],..., Data [m]. The plurality of data lines Data [1], Data [2],..., Data [m] are extended in a first direction in the liquid crystal display panel 140' and coupled to a plurality of pixels. The first direction is vertically oriented in FIG. 2.

The gate driver 110' sequentially supplies a gate voltage to the liquid crystal display panel 140' through a plurality of gate lines Gate [1], Gate [2],..., Gate [n]. The plurality of gate lines Gate [1], Gate [2],..., Gate [n] are extended in a second direction between a first side (i.e., left side) and a second side (i.e., right side) of the liquid crystal display panel 140', crossing the plurality of data lines and coupled to the plurality of pixels. The second direction is horizontally oriented in FIG. 2. Odd gate lines are configured to transfer the gate voltage from the second side of the liquid crystal display panel proximate to the m data line Data [m] toward the first side of the liquid crystal display panel proximate to the first data line Data [1]. Even gate lines are configured to transfer the gate voltage from the first side of the liquid crystal display panel proximate to the first data line Data [1] toward the second side of the liquid crystal display panel proximate to the m data line Data [m]. In other words, the odd gate lines apply the gate voltage from the pixels coupled to the m data line Data [m] to the pixels coupled to the first data line Data [1], and the even gate lines apply the gate voltage from the pixels coupled to the first data line Data [1] to the pixels coupled to the m data line Data [m].

In the pixels coupled to the odd gate lines, the delay time of the gate voltage applied to the pixels coupled to the m data line Data [m] is shortest and the delay time of the gate voltage applied to the pixels coupled to the first data line Data [1] is longest. In the pixels coupled to the even gate lines, the delay time of the gate voltage applied to the pixels coupled to the first data line Data [1] is shortest and the delay time of the gate voltage applied to the pixels coupled to the m data line Data [m] is longest.

The common voltage supplier 130' generates common voltage Vcom that is a reference voltage at the time of operating the liquid crystal cells and supplies the common voltage through common voltage lines Vcom_OL (odd common voltage lines) and Vcom_EL (even common voltage lines). The common voltage lines Vcom_OL and Vcom_EL are extended in the second direction in the liquid crystal display panel 140' and coupled to the plurality of pixels. The odd common voltage lines Vcom_OL are configured to transfer the common voltage from the first side of the liquid crystal display panel proximate to the first data line Data [1] toward the second side of the liquid crystal display panel proximate to the m data line Data [m], and the even common voltage lines Vcom_EL are configured to transfer the common voltage from the second side of the liquid crystal display panel proximate to the m data line Data [m] toward the first side of the liquid crystal display panel proximate to the first data line Data [1]. In other words, the odd common voltage line Vcom_OL apply the gate voltage from the pixels coupled to the first data line Data [1] to the pixels coupled to the m data line Data [m], and the even common voltage lines Vcom_EL apply the common voltage from the pixels coupled to the m data line Data [m] to the pixels coupled to the first data line Data [1]. In the pixels coupled to the odd common voltage lines Vcom_OL, the delay time of the common voltage applied to the pixels coupled to the first data line Data [1] is shortest and the delay time of the common voltage applied to the pixels coupled to the m data line Data [m] is longest. In the pixels coupled to the even common voltage lines Vcom_EL, the delay time of the common voltage applied to the pixels coupled to the first data line Data [1] is longest and the delay time of the common voltage applied to the pixels coupled to the m data line Data [m] is shortest.

The liquid crystal display. panel 140' includes the plurality of data lines Data [1], Data [2], ..., Data [m], which are extended in the first direction, the plurality of gate lines Gate [1], Gate [2],..., Gate [n] and the common voltage lines Vcom_OL, Vcom_EL, which are extended in the second direction, and the pixels P defined by the plurality of gate lines Gate [1], Gate [2],..., Gate [n], the common voltage lines Vcom_OL, Vcom_EL and the plurality of data lines Data [1], Data [2], ..., Data [m].

Here, each of the pixels may be formed in a pixel region defined by two neighboring gate lines (or common voltage lines) and two neighboring data lines. As described above, the gate lines Gate [1], Gate [2],..., Gate [n] may be supplied with the gate voltage from the gate driver 110',the data lines Data [1], Data [2], ..., Data [m] may be supplied with the data voltage from the data driver 120 and the common voltage lines Vcom_OL, Vcom_EL may be supplied with the common voltage from the common voltage driver 130'.

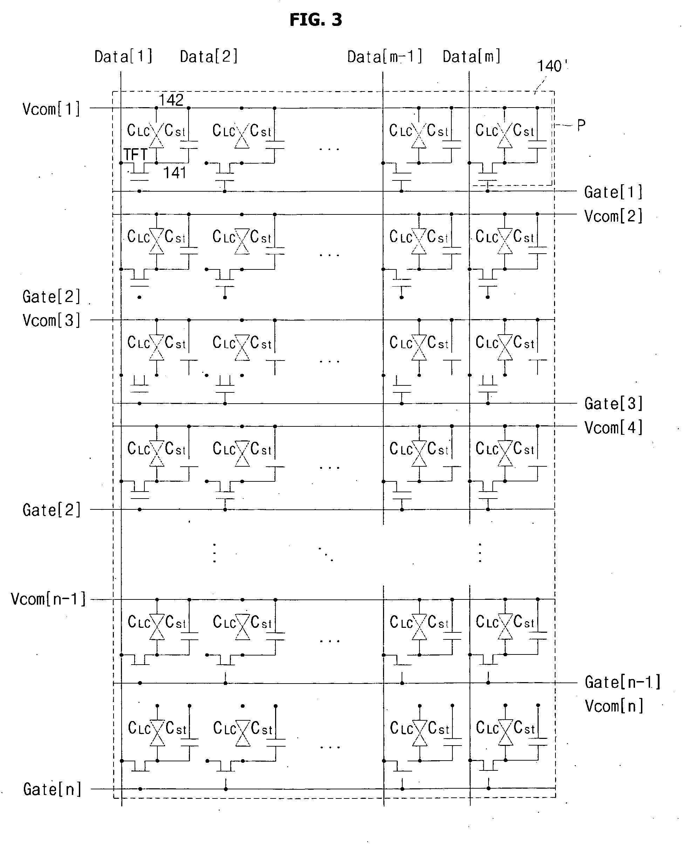

Referring to FIG. 3, there is presented a circuit diagram illustrating the pixels on the liquid crystal display of FIG. 2 as an equivalent circuit.

Each of the plurality of pixels on the liquid crystal display of FIG. 3 includes a thin film transistor, a liquid crystal element C_{LC} and a storage capacitor Cₛₜ.

The thin film transistor (hereinafter, referred to as "TFT") includes a gate electrode, a first electrode and a second electrode. The gate electrode is coupled to a corresponding one of the plurality of gate lines Gate [1], Gate [2],..., Gate [n], the first electrode (a drain electrode or a source electrode) is coupled to a corresponding one of the plurality of data lines Data [1], Data [2], ..., Data [m], and the second electrode (a source electrode or a drain electrode) is coupled to a pixel electrode 141. The TFT is turned on when a high level of gate voltage is applied to the gate electrode to transfer the data voltage from the data lines Data [1], Data [2], ..., Data [m] to the pixel electrode 141.

The liquid crystal element C_{LC} includes a first electrode and a second electrode. The first electrode is coupled to the pixel electrode 141 and the second electrode is coupled to a common electrode 142. The liquid crystal element C_{LC} controls the amount of light transmitted or shields light by changing the arrangement of liquid crystal molecules with an electric field in a liquid crystal layer therein. The electric field is generated when the data voltage is applied to the pixel electrode 141 and the common voltage Vcom is applied from the common voltage supplier 130'.

The storage capacitor Cₛₜ includes a first electrode and a second electrode. The first electrode is coupled to the pixel electrode 141 and the second electrode is coupled to the common electrode 142. In other words, the storage capacitor Cₛₜ is coupled to the liquid crystal element C_{LC} in parallel. When a high level of gate voltage is applied to the gate electrode of the TFT, the TFT is turned on. When the TFT is turned on, the data voltage is applied to the pixel electrode 141 and the storage capacitor Cₛₜ stores an amount of charge equal to the voltage difference between the pixel electrode 141 and the common electrode 142. When the TFT is turned off, the amount of charge that was previously stored in the storage capacitor Cₛₜ is supplied to the pixel electrode 141, thereby maintaining the operation of the liquid crystal element.

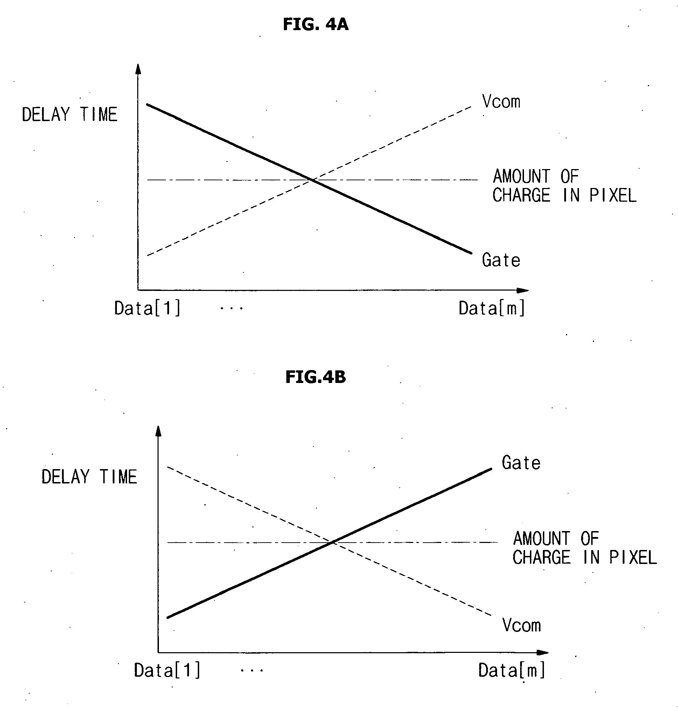

Referring to FIGS. 4a and 4b, there are presented graphs illustrating the relationship between the data line coupled to the pixel in the liquid crystal display of FIG. 2 and the amount of charge in the pixel.

FIG. 4a is a graph illustrating the amount of charge in the odd pixels coupled to the odd gate lines Gate [1], Gate [3],..., Gate [n-1]. The pixels are coupled to the data lines Data [1], Data [2], ..., Data [m] extending in a first direction and the odd gate lines Gate [1], Gate [3],..., Gate [n-1] and the odd common voltage lines Vcom_OL extending in a second direction between the first side and the second side of the liquid crystal display and crossing the plurality of data lines. Here, the odd gate lines extend from near the second side toward the first side, and the odd common voltage lines Vcom_OL extend from near the first side toward the second side.

Referring to the amount of charge in the odd pixels, the delay time of the gate voltage applied to the pixels coupled to the first data line Data [1] is longer than that of the gate voltage applied to the pixels coupled to other data lines Data [2], Data[3],..., Data [m], and the delay time of the common voltage is shorter than that of the common voltage applied to the pixels coupled to other data lines Data [2], Data [3],... , Data [m]. Additionally, the delay time of the gate voltage applied to the pixels coupled to the m data line Data [m] is shorter than that of the gate voltage applied to the pixels coupled to other data lines Data [1], Data[2],..., Data [m-1], and the delay time of the common voltage is longer than that of the common voltage applied to the pixels coupled to other data lines Data [1], Data [2],... , Data [m-1].

Here, the difference between the delay time of the gate voltage applied to the pixels coupled to the first data line Data [1] and the delay time of the gate voltage applied to the pixels coupled to the m data line Data [m] is substantially the same as the difference between the delay time of the common voltage applied to the pixels coupled to the m data line Data [m] and the delay time of the common voltage applied to the pixels coupled to the first data line Data [1]. In other words, the delay time of the gate voltage applied to the pixels coupled to the first data line Data [1] is compensated by the delay time of the common voltage. Likewise, the delay time of the common voltage applied to the pixels coupled to the m data line Data [m] is compensated by the delay time of the gate voltage so that each of the pixels has substantially the same amount of charge. Accordingly, the delay time of the gate voltage and the delay time of the common voltage mutually compensate for each other for each of the pixels coupled to any of the plurality of data lines. The pixels having substantially the same amount of charge may prevent or reduce afterimage phenomena and remaining voltage caused by non-uniform amounts of charge in the pixels. In one embodiment, since the common voltage lines Vcom_OL and the odd gate lines Gate [1], Gate [3],..., Gate [n-1] use the same metal line with the same delay characteristics during fabrication, the delay time corresponding to the distance is substantially the same.

FIG. 4b is a graph illustrating the amount of charge in the even pixels coupled to the even gate lines Gate [2], Gate [4],..., Gate [n]. The pixels are coupled to the plurality of data lines extending in the first direction and the even gate lines and the even common voltage lines Vcom_EL extending in the second direction between the first side and the second side of the liquid crystal display and crossing the plurality of data lines. Here, the even gate lines extend from near the first side toward the second side, and the even common voltage lines Vcom_EL extend from near the second side toward the first side.

Referring to the amount of charge in the even pixels, the delay time of the gate voltage applied to the pixels coupled to the first data line Data [1] is shorter than that of the gate voltage applied to the pixels coupled to other data lines Data [2], Data[3],..., Data [m], and the delay time of the common voltage is longer than that of the common voltage applied to the pixels coupled to other data lines Data [2], Data [3],... , Data [m]. Additionally, the delay time of the gate voltage applied to the pixels coupled to the m data line Data [m] is longer than that of the gate voltage applied to the pixels coupled to other data lines Data [1], Data[2],..., Data [m-1], and the delay time of the common voltage is shorter than that of the common voltage applied to the pixels coupled to other data lines Data [1], Data [2],... , Data [m-1].

Here, the difference between the delay time of the gate voltage applied to the pixels coupled to the m data line Data [m] and the delay time of the gate voltage applied to the pixels coupled to the first data line Data [1] is substantially the same as the difference between the delay time of the common voltage applied to the pixels coupled to the first data line Data [1] and the delay time of the common voltage applied to the pixels coupled to the m data line Data [m]. In other words, the delay time of the common voltage applied to the pixels coupled to the first data line Data [1] is compensated by the delay time of the gate voltage. Likewise, the delay time of the gate voltage applied to the pixels coupled to the m data line Data [m] is compensated by the delay time of the common voltage so that each of the pixels has substantially the same amount of charge. Accordingly, the delay time of the gate voltage and the delay time of the common voltage mutually compensate for each other for each of the pixels coupled to any of the plurality of data lines. The pixels having the same amount of charge may prevent or reduce afterimage phenomena as well as remaining voltage caused by non-uniform amounts of charge in the pixels. In one embodiment, since the common voltage lines Vcom_EL and the even gate lines Gate [2], Gate [4],..., Gate [n] use the same metal line with the same delay characteristics, the delay time during fabrication corresponding to the distance is substantially the same.

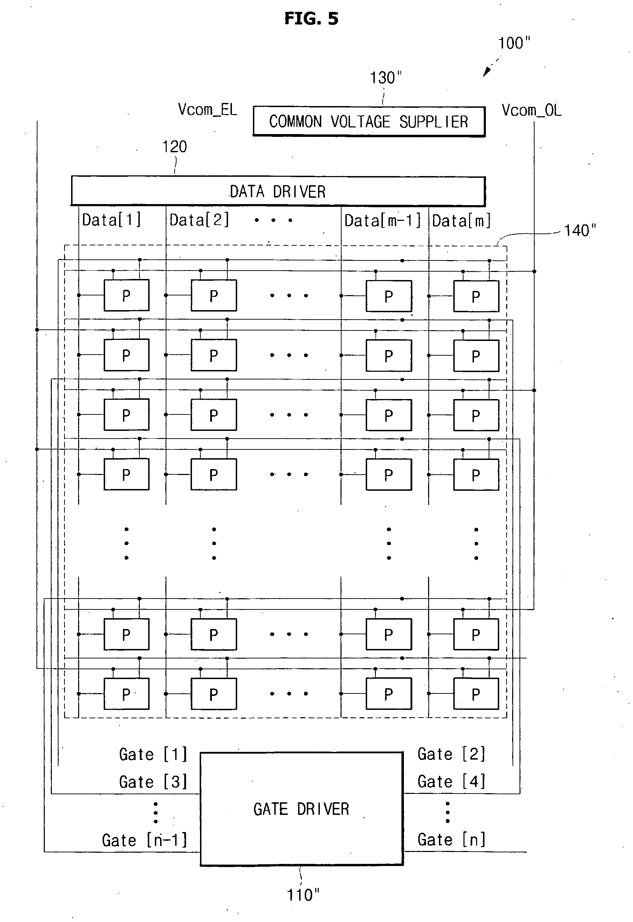

Referring to FIG. 5, there is illustrated a liquid crystal display according to another embodiment of the present invention.

As illustrated in FIG. 5, the liquid crystal display 100" includes gate driver 110", a data driver 120, a common voltage supplier 130", and a liquid crystal display panel 140".

The data driver 120 supplies a data voltage to the liquid crystal display panel 140" through a plurality of data lines Data [1], Data [2],..., Data [m]. The plurality of data lines Data [1], Data [2],..., Data [m] are extended in a first direction in the liquid crystal display panel 140" and coupled to a plurality of pixels. The first direction may be vertically oriented in FIG. 5.

The gate driver 110" sequentially supplies gate voltage to the liquid crystal display panel 140" through a plurality of gate lines Gate [1], Gate [2],..., Gate [n]. The plurality of gate lines Gate [1], Gate [2],..., Gate [n] are extended in a second direction between a first side (i.e., left side) and a second side (i.e., right side) of the liquid crystal display panel 140", crossing the plurality of data lines and coupled to the plurality of pixels. The second direction is horizontally oriented in FIG. 5.

Odd gate lines are configured to transfer gate voltage from the first side of the liquid crystal display panel proximate to the first data line Data [1] toward the second side of the liquid crystal display panel proximate to the m data line Data [m], and the even gate lines are configured to transfer the gate voltage from the second side of the liquid crystal display panel proximate to the m data line Data [m] toward the first side of the liquid crystal display panel proximate to the first data line Data [1]. In other words, the odd gate lines therefore apply the gate voltage from the pixels coupled to the first data line Data [1] to the pixels coupled to the m data line Data [m], and the even gate lines apply the gate voltage from the pixels coupled to the m data line Data [m] to the pixels coupled to the first data line Data [1]. In the pixels coupled to the odd gate lines, the delay time of the gate voltage applied to the pixels coupled to the first data line Data [1] is shortest and the delay time of the gate voltage applied to the pixels coupled to the m data line Data [m] is longest. In the pixels coupled to the even gate lines, the delay time of the gate voltage applied to the pixels coupled to the m data line Data [m] is shortest and the delay time of the gate voltage applied to the pixels coupled to the first data line Data [1] is longest.

The common voltage supplier 130" generates common voltage Vcom that is a reference voltage at the time of operating the liquid crystal cells and supplies the common voltage through common voltage lines Vcom_OL (odd common voltage lines) and Vcom_EL (even common voltage lines). The common voltage lines Vcom_OL and

Vcom_EL are extended in the second direction in the liquid crystal display panel 140" and coupled to the plurality of pixels.

The odd common voltage lines Vcom_OL are configured to transfer the common voltage from the second side of the liquid crystal display panel proximate to the m data line Data [m] toward the first side of the liquid crystal display panel proximate to the first data line Data [1]. The even common voltage lines Vcom_EL are configured to transfer the common voltage from the first side of the liquid crystal display panel proximate to first data line Data [1] toward the second side of the liquid crystal display panel proximate to the m data line Data [m]. In other words, the odd common voltage lines Vcom_OL apply the gate voltage from the pixels coupled to the m data line Data [m] to the pixels coupled to the first data line Data [1], and the even common voltage lines Vcom_EL apply the common voltage from the pixels coupled to the first data line Data [1] to the pixels coupled to the m data line Data [m]. In the pixels coupled to the odd common voltage lines Vcom_OL, the delay time of the common voltage applied to the pixels coupled to the m data line Data [m] is shortest and the delay time of the common voltage applied to the pixels coupled to the first data line Data [1] is longest. In the pixels coupled to the even common voltage lines Vcom_EL, the delay time of the common voltage applied to the pixels coupled to the m data line Data [m] is longest and the delay time of the common voltage applied to the pixels coupled to the first data line Data [1] is shortest.

The liquid crystal display panel 140" includes the plurality of data lines Data [1], Data [2], ..., Data [m], which are extended in the first direction, the plurality of gate lines Gate [1], Gate [2],..., Gate [n] and the common voltage lines Vcom_OL, Vcom_EL, which are extended in the second direction, and the pixels P defined by the plurality of gate lines Gate [1], Gate [2],..., Gate [n], the common voltage lines Vcom_OL, Vcom_EL and the plurality of data lines Data [1], Data [2], ..., Data [m].

Here, each of the pixels may be formed in a pixel region defined by two neighboring gate lines (or common voltage lines) and two neighboring data lines. As described above, the gate lines Gate [1], Gate [2],..., Gate [n] may be supplied with the gate voltage from the gate driver 110", the data lines Data [1], Data [2], ..., Data [m] may be supplied with the data voltage from the data driver 120 and the common voltage lines Vcom_OL, Vcom_EL may be supplied with the common voltage from the common voltage driver 130".

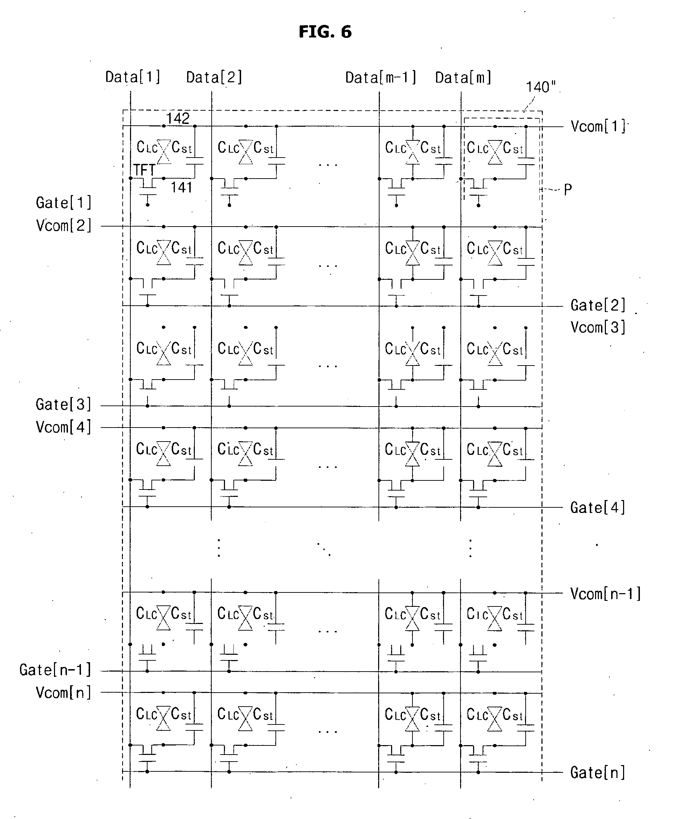

Referring to FIG. 6, there is presented a circuit diagram illustrating the pixels on the liquid crystal display of FIG. 5 as an equivalent circuit.

Each of the plurality of pixels on the liquid crystal display of FIG. 6 includes a TFT, a liquid crystal element C_{LC} and a storage capacitor Cₛₜ.

The TFT includes a gate electrode, a first electrode and a second electrode. The gate electrode is coupled to a corresponding one of the plurality of gate lines Gate [1], Gate [2],..., Gate [n], the first electrode (a drain electrode or a source electrode) is coupled to a corresponding one of the plurality of data lines Data [1], Data [2], ..., Data [m], and the second electrode (a source electrode or a drain electrode) is coupled to a pixel electrode 141. The TFT is turned on when a high level of gate voltage is applied to the gate electrode to transfer the data voltage from the data lines Data [1], Data [2], ..., Data [m] to the pixel electrode 141.

The liquid crystal element C_{LC} includes a first electrode and a second electrode. The first electrode is electrically coupled to the pixel electrode 141 and the second electrode is coupled to a common electrode 142. The liquid crystal element C_{LC} controls the amount of light transmitted or shields light by changing the arrangement of liquid crystal molecules with an electric field in a liquid crystal layer therein. The electric field is generated when the data voltage is applied to the pixel electrode 141 and the common voltage Vcom is applied from the common voltage supplier 130". The storage capacitor Cₛₜ includes a first electrode and a second electrode. The first electrode is coupled to the pixel electrode 141 and the second electrode is electrically coupled to the common electrode 142. In other words, the storage capacitor Cₛₜ is coupled to the liquid crystal element C_{LC} in parallel. When a high level of gate voltage is applied to the gate electrode of the TFT, the TFT is turned on. When the TFT is turned on, the data voltage is applied to the pixel electrode 141 and the storage capacitor Cₛₜ stores an amount of charge equal to the voltage difference between the pixel electrode 141 and the common electrode 142. When the TFT is turned off, the amount of charge that was previously stored in the storage capacitor Cₛₜ is supplied to the pixel electrode 141, thereby maintaining the operation of the liquid crystal element.

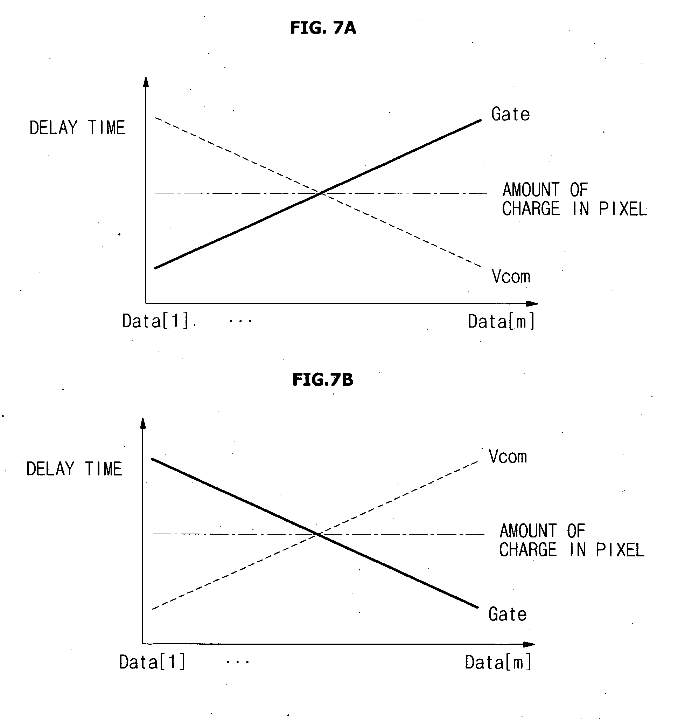

Referring to FIGS. 7a and 7b, there are presented graphs illustrating the relationship between the data line coupled to the pixel in the liquid crystal display of FIG. 5 and the amount of charge in the pixel.

FIG. 7a is a graph illustrating the amount of charge in the odd pixels coupled to the odd gate lines Gate [1], Gate [3],..., Gate [n-1]. The pixels are coupled to the data lines Data [1], Data [2], ..., Data [m] extended in the first direction and the odd gate lines Gate [1], Gate [3],..., Gate [n-1] and the odd common voltage lines Vcom_OL extended in the second direction between the first side and the second side of the liquid crystal display and crossing the plurality of data lines. Here, the odd gate lines extend from near the first side toward the second side, and the odd common voltage lines Vcom_OL extend from near the second side toward the first side.

Referring to the amount of charge in the odd pixels, the delay time of the gate voltage applied to the pixels coupled to the first data line Data [1] is shorter than that of the gate voltage applied to the pixels coupled to other data lines Data [2], Data[3],..., Data [m], and the delay time of the common voltage is longer than that of the common voltage applied to the pixels coupled to other data lines Data [2], Data [3],... , Data [m].

Additionally, the delay time of the gate voltage applied to the pixels coupled to the m data line Data [m] is longer than that of the gate voltage applied to the pixels coupled to other data lines Data [1], Data[2],..., Data [m-1], and the delay time of the common voltage is shorter than that of the common voltage applied to the pixels coupled to other data lines Data [1], Data [2],... , Data [m-1].

Here, the difference between the delay time of the gate voltage applied to the pixels coupled to the first data line Data [1] and the delay time of the gate voltage applied to the pixels coupled to the m data line Data [m] is substantially the same as the difference between the delay time of the common voltage applied to the pixels coupled to the m data line Data [m] and the delay time of the common voltage applied to the pixels coupled to the first data line Data [1]. In other words, the delay time of the gate voltage applied to the pixels coupled to the first data line Data [1] is compensated by the delay time of the common voltage. Likewise, the delay time of the common voltage applied to the pixels coupled to the m data line Data [m] is compensated by the delay time of the gate voltage so that each of the pixels has substantially the same amount of charge. Accordingly, the delay time of the gate voltage and the delay time of the common voltage mutually compensate for each other for each of the pixels coupled to any of the plurality of data lines. The pixels having substantially the same amount of charge may prevent or reduce afterimage phenomena and remaining voltage caused by non-uniform amounts of charge in each of the pixels. In one embodiment, since the common voltage lines Vcom_OL and the odd gate lines Gate [1], Gate [3],..., Gate [n-1] use the same metal line with the same delay characteristics during fabrication, the delay time corresponding to the distance is substantially the same.

FIG. 7b is a graph illustrating the amount of charge in the even pixels coupled to the even gate lines Gate [2], Gate [4],..., Gate [n]. The pixels are coupled to the plurality of data lines Data [1], Data [2], ..., Data [m] extended in the first direction and the even gate lines Gate [2], Gate [4],..., Gate [n] and the even common voltage lines Vcom_EL extended in the second direction between the first side and the second side of the liquid crystal display and crossing the plurality of data lines. Here, the even gate lines extend from near the second side toward the first side, and the even common voltage lines Vcom_EL extend from near the second side toward the first side.

Referring to the amount of charge in the even pixels, the delay time of the gate voltage applied to the pixels coupled to the first data line Data [1] is longer than that of the gate voltage applied to the pixels coupled to other data lines Data [2], Data[3],..., Data [m], and the delay time of the common voltage is shorter than that of the common voltage applied to the pixels coupled to other data lines Data [2], Data [3],... , Data [m]. Additionally, the delay time of the gate voltage applied to the pixels coupled to the m data line Data [m] is shorter than that of the gate voltage applied to the pixels coupled to other data lines Data [1], Data[2],..., Data [m-1], and the delay time of the common voltage is longer than that of the common voltage applied to the pixels coupled to other data lines Data [1], Data [2],... , Data [m-1].

Here, the difference between the delay time of the gate voltage applied to the pixels coupled to the m data line Data [m] and the delay time of the gate voltage applied to the pixels coupled to the first data line Data [1] is substantially the same as the difference between the delay time of the common voltage applied to the pixels coupled to the first data line Data [1] and the delay time of the common voltage applied to the pixels coupled to the m data line Data [m]. In other words, the delay time of the gate voltage applied to the pixels coupled to the first data line Data [1] is compensated by the delay time of the common voltage. Likewise, the delay time of the common voltage applied to the pixels coupled to the m data line Data [m] is compensated by the delay time of the gate voltage so that each of the pixels has substantially the same amount of charge. Accordingly, the delay time of the gate voltage and the delay time of the common voltage mutually compensate for each other for each of the pixels coupled to any of the plurality of data lines. The pixels having the same amount of charge may prevent or reduce afterimage phenomena and remaining voltage caused by non-uniform amounts of charge in each of the pixels. In one embodiment, since the common voltage lines Vcom_EL and the even gate lines Gate [2], Gate [4],..., Gate [n] use the same metal line with the same delay characteristics during fabrication, the delay time corresponding to the distance is substantially the same.

As described above, the liquid crystal display according to exemplary embodiments of the present invention may prevent or reduce generation of afterimage phenomena and remaining voltage caused by non-uniform amounts of charge in each of the pixels by uniformly maintaining the charge in the pixels.

## Claims

1. A liquid crystal display (100) comprising:
a data driver (120) for supplying data voltages to a plurality of data lines (Data[1],...,Data[m]) extending in a first direction;
a gate driver (110) for supplying a gate voltage to a plurality of gate lines (Gate[1],...,Gate[n]) extending in a second direction from a first side to a second side opposite to the first side of the liquid crystal display (100) and crossing the data lines (Data[1],...,Data[m]); and
a common voltage supplier (130) for supplying a common voltage to a plurality of common voltage lines (Vcom[1],...,Vcom[n]) crossing the data lines (Data[1],...,Data[m]) and parallel with the gate lines (Gate[1],...,Gate[m]);
whereby
the gate lines (Gate[1],...,Gate[n]) comprise even numbered gate lines (Gate[2],...,Gate[n]) and odd numbered gate lines (Gate[1],...,Gate[n-1]), the even numbered gate lines (Gate[2],...,Gate[n]) being coupled to the gate driver (110) at a location proximate to the first side and the odd numbered gate lines (Gate[1],...,Gate[n-1]) being coupled to the gate driver (110) at a location proximate to the second side; and
**characterised in that**
the common voltage lines (Vcom[1],...,Vcom[n]) comprise even numbered common voltage lines (Vcom[2],...,Vcom[n]) and odd numbered common voltage lines (Vcom[1],...,Vcom[n-1]), the odd numbered common voltage lines (Vcom[1],...,Vcom[n-1]) being coupled to the common voltage supplier (130) at a location proximate to the first side and the even numbered common voltage lines (Vcom[2],...,Vcom[n]) being coupled to the common voltage supplier (130) at a location proximate to the second side.

2. The liquid crystal display (100) as claimed in claim 1, wherein the odd numbered gate lines (Gate[1],...,Gate[n-1]) are configured to transfer the gate voltage from the second side toward the first side and the even numbered gate lines (Gate[2],...,Gate[n]) are configured to transfer the gate voltage from the first side toward the second side.

3. The liquid crystal display (100) as claimed in one of claims 1 or 2, wherein the odd numbered common voltage lines (Vcom[1],...,Vcom[n-1]) are configured to transfer the common voltage from the first side toward the second side and the even numbered common voltage lines (Vcom[2],...,Vcom[n]) are configured to transfer the common voltage from the second side toward the first side.

4. The liquid crystal display (100) as claimed in one of the preceding claims, further comprising a plurality of pixels (140), each of the plurality of pixels (140) being coupled to a corresponding one of the plurality of data lines (Data[1],...,Data[m]), a corresponding one of the plurality of gate lines (Gate[1],...,Gate[n]), and a corresponding one of the plurality of common voltage lines (Vcom[1],...,Vcom[n]), and configured to receive a data voltage, the gate voltage, and the common voltage to operate a liquid crystal element (C_{LC})therein.

5. The liquid crystal display (100) as claimed in claim 4, wherein each of the plurality of pixels (140) is located at an area where said one of the plurality of data lines (Data[1],...,Data[m]) crosses said one of the plurality of gate lines (Gate[1],...,Gate[n]) and said one of the plurality of common voltage lines (Vcom[1],...,Vcom[n]).

6. The liquid crystal display (100) as claimed in one of the claims 4 or 5, wherein each of the plurality of pixels (140) comprises:
a thin film transistor coupled between said one of the plurality of data lines (Data[1],...,Data[m]) and a pixel electrode;
a liquid crystal element (C_{LC}) coupled between the pixel electrode and a common electrode; and
a storage capacitor (Cst) coupled between the pixel electrode and the common electrode.

7. The liquid crystal display (100) as claimed in claim 6, wherein the thin film transistor comprises a control electrode coupled to said one of the plurality of gate lines (Gate[1],...,Gate[n]), a first electrode coupled to said one of the plurality of data lines (Data[1],...,Data[m]), and a second electrode coupled to the pixel electrode.

8. The liquid crystal display as claimed in one of claims 6 or 7, wherein the common electrode is coupled to said one of the plurality of common voltage lines (Vcom[1],...,Vcom[n]).

9. The liquid crystal display (100) as claimed in claim 4 or in claim 4 and one of the claims 5 through 8, wherein the gate voltage supplied by the even numbered gate lines (Gate[2],...,Gate[n]) is applied from the first side toward the second side and the gate voltage supplied by the odd numbered gate lines (Gate[1],...,Gate[n-1]) is applied from the second side toward the first side and the common voltage supplied by the even numbered common voltage lines (Vcom[2],...,Vcom[n]) is applied from the second side toward the first side and the common voltage supplied by the odd numbered common lines (Vcom[1],...,Vcom[n-1]) is applied from the first side toward the second side to compensate for each other.

10. The liquid crystal display as claimed in claim 9, wherein the amount of charge remains substantially uniform in the pixels near the first side and coupled to the even numbered gate lines and the even numbered common voltage lines, the gate voltage compensating for a delay of the common voltage supplied to the pixels near the first side.

11. The liquid crystal display as claimed in claim 10, wherein the amount of charge remains substantially uniform in the pixels near the second side and coupled to the even gate lines and the even common voltage lines, the common voltage compensating for a delay of the gate voltage supplied to the pixels near the second side.

12. The liquid crystal display as claimed in claim 11 wherein the amount of charge remains substantially uniform in the pixels near the first side and coupled to the odd gate lines and the odd common voltage lines, the common voltage compensating for a delay of the gate voltage supplied to the pixels near the first side

13. The liquid crystal display as claimed in claim 12, wherein the amount of charge remains substantially uniform in the pixels near the second side and coupled to the odd numbered gate lines and the odd numbered common voltage lines, the gate voltage compensating for a delay of the common voltage supplied to the pixels near the second side.

## Patentansprüche

1. Eine Flüssigkristallanzeige (100), umfassend:
einen Datentreiber (120) zum Liefern von Datenspannungen an eine Vielzahl von Datenleitungen (Data[1], ..., Data[m]), die sich in einer ersten Richtung erstrecken;
einen Gate-Treiber (110) zum Liefern einer Gate-Spannung an eine Vielzahl von Gate-Leitungen (Gate[1], ..., Gate[n]), die sich in einer zweiten Richtung von einer ersten Seite zu einer der ersten Seite der Flüssigkristallanzeige (100) gegenüberliegenden zweiten Seite erstrecken und die Datenleitungen (Data[1], ..., Data[m]) kreuzen; und
eine Quelle gemeinsamer Spannung (130) zum Liefern einer gemeinsamen Spannung an eine Vielzahl von Leitungen gemeinsamer Spannung (Vcom[1], ..., Vcom[n]), die die Datenleitungen (Data[1], ..., Data[m]) kreuzen und parallel zu den Gate-Leitungen (Gate[1], ..., Gate[m]) liegen;
wobei
die Gate-Leitungen (Gate[1],...,Gate[n]) geradzahlige Gate-Leitungen (Gate[2], ..., Gate[n]) und ungeradzahlige Gate-Leitungen (Gate[1], ..., Gate[n-1]) umfassen, wobei die geradzahligen Gate-Leitungen (Gate[2], ..., Gate[n]) an einer Stelle nahe der ersten Seite mit dem Gate-Treiber (110) verbunden sind und die ungeradzahligen Gate-Leitungen (Gate[1], ..., Gate[n-1]) an einer Stelle nahe der zweiten Seite mit dem Gate-Treiber (110) verbunden sind; und
**dadurch gekennzeichnet, dass**
die Leitungen gemeinsamer Spannung (Vcom[1], ..., Vcom[n]) geradzahlige Leitungen gemeinsamer Spannung (Vcom[2], ..., Vcom[n]) und ungeradzahlige Leitungen gemeinsamer Spannung (Vcom[1], ..., Vcom[n-1]) umfassen, wobei die ungeradzahligen Leitungen gemeinsamer Spannung (Vcom[1], ..., Vcom[n-1]) an einer Stelle nahe der ersten Seite mit der Quelle gemeinsamer Spannung (130) verbunden sind und die geradzahligen Leitungen gemeinsamer Spannung (Vcom[2], ..., Vcom[n]) an einer Stelle nahe der zweiten Seite mit der Quelle gemeinsamer Spannung (130) verbunden sind.

2. Die Flüssigkristallanzeige (100) nach Anspruch 1, wobei die ungeradzahligen Gate-Leitungen (Gate[1], ..., Gate[n-1]) dazu konfiguriert sind, die Gate-Spannung von der zweiten Seite in Richtung der ersten Seite zu übertragen und die geradzahligen Gate-Leitungen (Gate[2], ..., Gate[n]) dazu konfiguriert sind, die Gate-Spannung von der ersten Seite in Richtung der zweiten Seite zu übertragen.

3. Die Flüssigkristallanzeige (100) nach einem der Ansprüche 1 oder 2, wobei die ungeradzahligen Leitungen gemeinsamer Spannung (Vcom[1], ..., Vcom[n-1]) dazu konfiguriert sind, die gemeinsame Spannung von der ersten Seite in Richtung der zweiten Seite zu übertragen und die geradzahligen Leitungen gemeinsamer Spannung (Vcom[2], ..., Vcom[n]) dazu konfiguriert sind, die gemeinsame Spannung von der zweiten Seite in Richtung der ersten Seite zu übertragen.

4. Die Flüssigkristallanzeige (100) nach einem der vorhergehenden Ansprüche, ferner eine Vielzahl von Pixeln (140) umfassend, wobei jede der Vielzahl von Pixeln (140) mit einer entsprechenden der Vielzahl von Datenleitungen (Data[1], ..., Data[m]), einer entsprechenden der Vielzahl von Gate-Leitungen (Gate[1], ..., Gate[n]) und einer entsprechenden der Vielzahl von Leitungen gemeinsamer Spannung (Vcom[1], ..., Vcom[n]) verbunden ist und dazu konfiguriert ist, eine Datenspannung, die Gate-Spannung sowie die gemeinsame Spannung zu empfangen, um ein Flüssigkristallelement (C_{LC}) darin zu betreiben.

5. Die Flüssigkristallanzeige (100) nach Anspruch 4, wobei jedes der Vielzahl von Pixeln (140) an einem Bereich angeordnet ist, an dem die besagte der Vielzahl von Datenleitungen (Data[1], ..., Data[m]) die besagte der Vielzahl von Gate-Leitungen (Gate[1], ..., Gate[n]) und die besagte der Vielzahl von Leitungen gemeinsamer Spannung (Vcom[1], ..., Vcom[n]) kreuzt.

6. Die Flüssigkristallanzeige (100) nach einem der Ansprüche 4 oder 5, wobei jedes der Vielzahl von Pixeln (140) Folgendes umfasst:
einen zwischen die besagte der Vielzahl von Datenleitungen (Data[1], ..., Data[m]) und eine Pixel-Elektrode geschalteten Dünnfilmtransistor;
ein zwischen die Pixel-Elektrode und eine gemeinsame Elektrode geschaltetes Flüssigkristallelement (C_{LC}), und
einen zwischen die Pixel-Elektrode und die gemeinsame Elektrode geschalteten Speicherkondensator (Cst).

7. Die Flüssigkristallanzeige (100) nach Anspruch 6, wobei der Dünnfilmtransistor eine mit der besagten der Vielzahl von Gate-Leitungen (Gate[1], ..., Gate[n]) verbundene Steuerelektrode, eine mit der besagten der Vielzahl von Datenleitungen (Data[1], ..., Data[m]) verbundene erste Elektrode sowie eine mit der Pixel-Elektrode verbundene zweite Elektrode umfasst.

8. Die Flüssigkristallanzeige nach einem der Ansprüche 6 oder 7, wobei die gemeinsame Elektrode mit der besagten der Vielzahl von Leitungen gemeinsamer Spannung (Vcom[1], ..., Vcom[n]) verbunden ist.

9. Die Flüssigkristallanzeige (100) nach Anspruch 4 oder Anspruch 4 und einem der Ansprüche 5 bis 8, wobei die von den geradzahligen Gate-Leitungen (Gate[2], ..., Gate[n]) gelieferte Gate-Spannung von der ersten Seite in Richtung der zweiten Seite angelegt wird und die von den ungeradzahligen Gate-Leitungen (Gate[1], ..., Gate[n-1]) gelieferte Gate-Spannung von der zweiten Seite in Richtung der ersten Seite angelegt wird und die von den geradzahligen Leitungen gemeinsamer Spannung (Vcom[2], ..., Vcom[n]) gelieferte gemeinsame Spannung von der zweiten Seite in Richtung der ersten Seite angelegt wird und die von den ungeradzahligen gemeinsamen Leitungen (Vcom[1], ..., Vcom[n-1]) gelieferte gemeinsame Spannung von der ersten Seite in Richtung der zweiten Seite angelegt wird, um einander zu kompensieren.

10. Die Flüssigkristallanzeige nach Anspruch 9, wobei in den Pixeln, die sich nahe der ersten Seite befinden und mit den geradzahligen Gate-Leitungen und den geradzahligen Leitungen gemeinsamer Spannung verbunden sind, die Menge an Ladung im Wesentlichen gleichförmig bleibt, wobei die Gate-Spannung eine Verzögerung der den Pixeln nahe der ersten Seite gelieferten gemeinsamen Spannung kompensiert.

11. Die Flüssigkristallanzeige nach Anspruch 10, wobei in den Pixeln, die sich nahe der zweiten Seite befinden und mit den geradzahligen Gate-Leitungen und den geradzahligen Leitungen gemeinsamer Spannung verbunden sind, die Menge an Ladung im Wesentlichen gleichförmig bleibt, wobei die gemeinsame Spannung eine Verzögerung der den Pixeln nahe der zweiten Seite gelieferten Gate-Spannung kompensiert.

12. Die Flüssigkristallanzeige nach Anspruch 11, wobei in den Pixeln, die sich nahe der ersten Seite befinden und mit den ungeradzahligen Gate-Leitungen und den ungeradzahligen Leitungen gemeinsamer Spannung verbunden sind, die Menge an Ladung im Wesentlichen gleichförmig bleibt, wobei die gemeinsame Spannung eine Verzögerung der den Pixeln nahe der ersten Seite gelieferten Gate-Spannung kompensiert.

13. Die Flüssigkristallanzeige nach Anspruch 12, wobei in den Pixeln, die sich nahe der zweiten Seite befinden und mit den ungeradzahligen Gate-Leitungen und den ungeradzahligen Leitungen gemeinsamer Spannung verbunden sind, die Menge an Ladung im Wesentlichen gleichförmig bleibt, wobei die Gate-Spannung eine Verzögerung der den Pixeln nahe der zweiten Seite gelieferten gemeinsamen Spannung kompensiert.

## Revendications

1. Dispositif d'affichage à cristaux liquides (100), comprenant :
un dispositif d'attaque de données (120) pour délivrer des tensions de données à une pluralité de lignes de données (Data[1], ..., Data[m]) s'étendant dans une première direction ;
un dispositif d'attaque de grilles (110) pour délivrer une tension de grilles à une pluralité de lignes de grilles (Gate[1], ..., Gate[n]) s'étendant dans une deuxième direction d'un premier côté à un deuxième côté opposé au premier côté du dispositif d'affichage à cristaux liquides (100) et croisant les lignes de données (Data[1], ..., Data[m]) ; et
un dispositif de délivrance de tension commune (130) pour délivrer une tension commune à une pluralité de lignes de tension commune (Vcom[1], ..., Vcom[n]) croisant les lignes de données (Data[1], ..., Data[m]) et parallèles aux lignes de grilles (Gate[1], ..., Gate[m]) ;
grâce à quoi :
les lignes de grilles (Gate[1], ..., Gate[n]) comprennent des lignes de grilles de numéro pair (Gate[2], ..., Gate[n]) et des lignes de grilles de numéro impair (Gate[1], ..., Gate[n-1]), les lignes de grilles de numéro pair (Gate[2], ..., Gate[n]) étant couplées au dispositif d'attaque de grilles (110) en un emplacement proche du premier côté et les lignes de grilles de numéro impair (Gate[1], ..., Gate[n-1]) étant couplées au dispositif d'attaque de grilles (110) en un emplacement proche du deuxième côté ; et
**caractérisé en ce que :**
les lignes de tension commune (Vcom[1], ..., Vcom[n]) comprennent des lignes de tension commune de numéro pair (Vcom[2], ..., Vcom[n]) et des lignes de tension commune de numéro impair (Vcom[1], ..., Vcom[n-1]), les lignes de tension commune de numéro impair (Vcom[1], ..., Vcom[n-1]) étant couplées au dispositif de délivrance de tension commune (130) en un emplacement proche du premier côté et les lignes de tension commune de numéro pair (Vcom[2], ..., Vcom[n]) étant couplées au dispositif de délivrance de tension commune (130) en un emplacement proche du deuxième côté.

2. Dispositif d'affichage à cristaux liquides (100) selon la revendication 1, dans lequel les lignes de grilles de numéro impair (Gate[1], ..., Gate[n-1]) sont configurées de façon à transférer la tension de grille à partir du deuxième côté vers le premier côté et les lignes de grilles de numéro pair (Gate[2], ..., Gate[n]) sont configurées de façon à transférer la tension de grille à partir du premier côté vers le deuxième côté.

3. Dispositif d'affichage à cristaux liquides (100) selon l'une des revendications 1 ou 2, dans lequel les lignes de tension commune de numéro impair (Vcom[1], ..., Vcom[n-1]) sont configurées de façon à transférer la tension commune à partir du premier côté vers le deuxième côté et les lignes de tension commune de numéro pair (Vcom[2], ..., Vcom[n]) sont configurées de façon à transférer la tension commune à partir du deuxième côté vers le premier côté.

4. Dispositif d'affichage à cristaux liquides (100) selon l'une des revendications précédentes, comprenant de plus une pluralité de pixels (140), chacun de la pluralité de pixels (140) étant couplé à une ligne correspondante parmi la pluralité de lignes de données (Data[1], ..., Data[m]), à une ligne correspondante parmi la pluralité de lignes de grilles (Gate[1], ..., Gate[n]) et à une ligne correspondante parmi la pluralité de lignes de tension commune (Vcom[1], ..., Vcom[n]), et étant configuré de façon à recevoir une tension de données, la tension de grille et la tension commune afin d'actionner un élément de cristal liquide (C_{LC}) à l'intérieur de celui-ci.

5. Dispositif d'affichage à cristaux liquides (100) selon la revendication 4, dans lequel chacun de la pluralité de pixels (140) est situé dans une zone où ladite ligne parmi la pluralité de lignes de données (Data[1], ..., Data[m]) croise ladite ligne parmi la pluralité de lignes de grilles (Gate[1], ..., Gate[n]) et ladite ligne parmi la pluralité de lignes de tension commune (Vcom[1], ..., Vcom[n]).

6. Dispositif d'affichage à cristaux liquides (100) selon l'une des revendications 4 ou 5, dans lequel chacun de la pluralité de pixels (140) comprend :
un transistor à film mince couplé entre ladite ligne parmi la pluralité de lignes de données (Data[1], ..., Data[m]) et une électrode de pixel ;
un élément de cristal liquide (C_{LC}) couplé entre l'électrode de pixel et une électrode commune ; et
un condensateur de stockage (Cst) couplé entre l'électrode de pixel et l'électrode commune.

7. Dispositif d'affichage à cristaux liquides (100) selon la revendication 6, dans lequel le transistor à film mince comprend une électrode de commande couplée à ladite ligne parmi la pluralité de lignes de grilles (Gate[1], ..., Gate[n]), une première électrode couplée à ladite ligne parmi la pluralité de lignes de données (Data[1], ..., Data[m]), et une deuxième électrode couplée à l'électrode de pixels.

8. Dispositif d'affichage à cristaux liquides selon l'une des revendications 6 ou 7, dans lequel l'électrode commune est couplée à ladite ligne parmi la pluralité de lignes de tension commune (Vcom[1], ..., Vcom[n]).

9. Dispositif d'affichage à cristaux liquides (100) selon la revendication 4 ou selon la revendication 4 et l'une des revendications 5 à 8, dans lequel la tension de grille délivrée par les lignes de grilles de numéro pair (Gate[2], ..., Gate[n]) est appliquée à partir du premier côté vers le deuxième côté et la tension de grille délivrée par les lignes de grilles de numéro impair (Gate[1], ..., Gate[n-1]) est appliquée à partir du deuxième côté vers le premier côté, et la tension commune délivrée par les lignes de tension commune de numéro pair (Vcom[2], ..., Vcom[n]) est appliquée à partir du deuxième côté vers le premier côté et la tension commune délivrée par les lignes communes de numéro impair (Vcom[1], ..., Vcom[n-1]) est appliquée à partir du premier côté vers le deuxième côté de façon à se compenser mutuellement.

10. Dispositif d'affichage à cristaux liquides selon la revendication 9, dans lequel la quantité de charge reste sensiblement uniforme dans les pixels proches du premier côté et couplés aux lignes de grilles de numéro pair et aux lignes de tension commune de numéro pair, la tension de grille compensant un retard de la tension commune délivrée aux pixels proches du premier côté.

11. Dispositif d'affichage à cristaux liquides selon la revendication 10, dans lequel la quantité de charge reste sensiblement uniforme dans les pixels proches du deuxième côté et couplés aux lignes de grilles paires et aux lignes de tension commune paires, la tension commune compensant un retard de la tension de grille délivrée aux pixels proches du deuxième côté.

12. Dispositif d'affichage à cristaux liquides selon la revendication 11, dans lequel la quantité de charge reste sensiblement uniforme dans les pixels proches du premier côté et couplés aux lignes de grilles impaires et aux lignes de tension commune impaires, la tension commune compensant un retard de la tension de grille délivrée aux pixels proches du premier côté.

13. Dispositif d'affichage à cristaux liquides selon la revendication 12, dans lequel la quantité de charge reste sensiblement uniforme dans les pixels proches du deuxième côté et couplés aux lignes de grilles de numéro impair et aux lignes de tension commune de numéro impair, la tension de grille compensant un retard de la tension commune délivrée aux pixels proches du deuxième côté.
